(19) Europäisches Patentamt
European Patent Office
Office européen des brevets

(11) **EP 3 402 062 B1**

(12) **EUROPÄISCHE PATENTSCHRIFT**

(45) Veröffentlichungstag und Bekanntmachung des Hinweises auf die Patenterteilung:
**28.10.2020 Patentblatt 2020/44**

(51) Int Cl.:
*H02M 7/483* *(2007.01)*    *H02M 7/493* *(2007.01)*
*H02M 7/48* *(2007.01)*    *H02M 1/00* *(2006.01)*

(21) Anmeldenummer: **18165898.0**

(22) Anmeldetag: **05.04.2018**

(54) **KOPPLUNG VON MINDESTENS ZWEI MODULAREN MULTILEVEL UMRICHTERN**

CONNECTION OF AT LEAST TWO MODULAR MULTILEVEL CONVERTERS

COUPLAGE D'AU MOINS DEUX CONVERTISSEURS MODULAIRES À NIVEAUX MULTIPLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2017 DE 102017207900**

(43) Veröffentlichungstag der Anmeldung:
**14.11.2018 Patentblatt 2018/46**

(73) Patentinhaber: **Karlsruher Institut für Technologie 76131 Karlsruhe (DE)**

(72) Erfinder:
• **Himmelmann, Patrick**
  **76185 Karlsruhe (DE)**
• **Hiller, Marc**
  **75015 Bretten (DE)**

(74) Vertreter: **Altmann Stößel Dick Patentanwälte PartG mbB**
  **Dudenstrasse 46**
  **68167 Mannheim (DE)**

(56) Entgegenhaltungen:
EP-A1- 2 565 883    WO-A1-2014/169388
DE-A1-102014 100 257    JP-A- 2000 152 637

**Beschreibung**

Gebiet der Erfindung

Die Erfindung betrifft eine Vorrichtung, umfassend mindestens zwei gekoppelte Modulare Multilevel Umrichter, sowie ein Verfahren zur Kopplung von mindestens zwei Modularen Multilevel Umrichtern.

Stand der Technik

Modulare Multilevel Umrichter sowie verschiedene Vorrichtungen und Verfahren zu ihrer wechselseitigen Kopplung sind aus dem Stand der Technik bekannt.
Beispiele davon sind in Dokumenten DE 10 2014 100257, WO2014/169388, EP-A-2 565 883 und JP 2000 152637 enthalten.
Als "Modulare Multilevel Umrichter" werden Umrichter bezeichnet, welche eine Anzahl von Armen, die auch als "Zweige" benannt werden, aufweisen. Hierbei umfasst jeder dieser Arme mindestens zwei Zellen sowie eine Induktivität, die auch als "Drossel" oder "Zweigdrossel" bezeichnet wird, wobei die mindestens zwei Zellen und die Induktivität innerhalb des Armes in Form einer eine Reihenschaltung angeordnet sind. Jede Zelle in einem der Arme verfügt über einen steuerbaren Zweipol, welcher mindestens einen Energiespeicher und mindestens einen Ausgang zur Bereitstellung einer elektrischen Spannung aufweist, wobei die Zelle dazu eingerichtet sein kann, um elektrischen Spannungen unterschiedlicher Höhe bereitzustellen. Aus [1] sind Schaltungen für die Zellen bekannt, welche insbesondere in Form von Halbbrückenzellen oder Vollbrückenzellen vorliegen können.
Die Arme der Modularen Multilevel Umrichter verfügen typischerweise über eine Topologie, welche ausgewählt sein kann aus einer einarmigen Topologie, einer zweiarmigen Topologie, einer Statcom-Topologie [2], einer M2C-Topologie [3], einer M3C-Topologie [4] oder einer Hexverter-Topologie [5]. Darüber hinaus existieren weitere Topologien, wie eine M3C35-Topologie oder eine Nonverter-Topologie.
Aus [3] ist es weiterhin bekannt ist es, wie sich die Induktivitäten mehrerer Arme eines Umrichters miteinander koppeln lassen, um insbesondere eine Dynamik eines Ausgangsstromes zu verbessern. Verfügt ein Umrichter über mindestens zwei Anschlüsse für jeweils voneinander verschiedene Spannungssysteme, so kann durch eine Verbindung zwischen dem Umrichter und den mindestens zwei verschiedenen Spannungssystemen Energie zwischen den angeschlossenen verschiedenen Spannungssystemen übertragen werden. Beispielsweise kann hierdurch Energie zwischen zwei Dreiphasensystemen übertragen werden.
Alternativ oder zusätzlich kann die Verbindung zwischen den beiden verschiedenen Spannungssystemen über einen Transformator erfolgen, wodurch erreicht werden kann, dass die beiden Spannungssysteme galvanisch voneinander getrennt sind.
Alternativ oder zusätzlich können die Zellen eines Umrichters derart ausgeführt sein, dass diese jeweils über vier gesonderte Anschlüsse verfügen, wobei ein erstes Anschlusspaar von einem zweiten Anschlusspaar galvanisch isoliert ist, während ein Energieaustausch dennoch möglich bleibt [6]. Hierbei lassen sich insbesondere ein erster Umrichter und ein zweiter Umrichter derart miteinander verbinden, indem der erste Umrichter das erste Anschlusspaar von ausgewählten Zellen und der zweite Umrichter das zweite Anschlusspaar derselben ausgewählten Zellen verwendet.
Weiterhin bekannt ist, wie sich die eingesetzten Topologien derart regeln lassen, dass der Umrichter an den Anschlussklemmen das jeweils gewünschte Verhalten zeigt. Dadurch kann es insbesondere ermöglicht werden, eine lediglich durch die Maximalleistung des Umrichters begrenzte Blindleistung bereitzustellen oder alle Zellen auf denselben mittleren Ladezustand zu regeln.
In [7] findet sich ein Vorschlag für einen Umrichter in M2C-Topologie, in welchem die Induktivitäten in den Armen des Umrichters als Transformatoren ausgeführt sind, deren Primärseite an ein Netz angeschlossen ist. Nachteilig hieran ist, dass der Transformator mit Netzfrequenz betrieben wird, wodurch eine große Menge an magnetischem Material erforderlich ist.
[8] zeigt eine Kopplung von Induktivitäten für eine beispielhafte DC-DC-Steller Topologie. Nachteilig hieran ist, dass die Funktionsweise der Topologie als DC-DC-Steller nur mit idealen Bauelementen funktioniert, da die Energieverteilung zwischen den Armen auf beiden Seiten des Transformators nicht unabhängig voneinander erfolgen kann.
Aus dem Stand der Technik sind weiterhin sogenannte Festkörpertransformatoren, die auch als "Solid State Transformatoren" oder kurz "SST" bezeichnet werden, bekannt [9]. Die SST sind aktive Transformatoren, die jeweils über einen DC-Zwischenkreis verfügen, wodurch sich Sekundärseite und Primärseite des Transformators in Bezug auf Phasenlage und/oder Frequenz von Spannung und/oder Strom entkoppeln lassen. Damit kann der Leistungsfluss durch Transformator geregelt werden. Zudem können die SST Blindleistung erzeugen oder aufnehmen, wodurch sich die elektrische Spannung im Energieverteilnetz beeinflussen lässt. Da die SST in der Regel bei einer höheren Frequenz als die Netzfrequenz arbeiten, genügt hierfür eine geringere Menge an magnetischem Material.
Die SST liegen in verschiedenen Topologien vor [9]. Ein "AC-AC Full-bridge Converter" besitzt zwar eine einfache Regelbarkeit, jedoch nur zwei Ausgangsspannungslevel, so dass Filter benötigt werden und ein alleiniger Inselbetrieb nicht möglich ist. Weiterhin ist kein Energiespeicher vorhanden sind, so dass sich weder der Leistungsfluss regeln noch eine Blindleistung bereitstellen lässt. Schließlich ist diese Topologie kaum skalierbar, da hierfür höher sperrende Halbleiter oder mehrere in Reihe geschaltete Halbleiter erforderlich sind. Vergleichbare Nachteile finden sich bei der "AC-AC Flyback" Topologie. Eine verbesserte Ausführungsform stellt die "Three-stage SST based on DC-DC DAB" Topologie dar, bei welcher beide Seiten des Transformators mit einem Umrichter versehen werden. Dadurch bleiben jedoch die Nachteile der nur zwei Ausgangsspannungslevel und der fehlenden Skalierbarkeit bestehen. Gemäß [10] kann diese Ausführungsform auch mit Modularen Multilevel Umrichtern ausgestattet werden, wofür jedoch eine hohe Anzahl an Zellen erforderlich ist. Schließlich kann durch die "Three-stage: Multilevel Rectifier + DC-DC Full-bridge Converter + PWM Inverter" Topologie das Netzverhalten verbessert und die Sperrfähigkeit der Halbleiter verringert werden, wobei auch die hier auftretende fehlende Skalierbarkeit nachteilig bleibt.

DE 10 2014 100 257 A1 offenbart eine Vorrichtung, welche zwei Modulare Multilevel Umrichter umfasst, wobei jeder der Umrichter mehrere Arme aufweist, wobei jeder Arm über eine Reihenschaltung von mehrere Zellen und einer Induktivität verfügt, wobei jede Zelle einen steuerbaren aktiven Zweipol, welcher mindestens einen Energiespeicher und zwei Ausgänge zur Bereitstellung einer elektrischen Spannung aufweist. Hierbei sind die beiden Umrichter derart miteinander gekoppelt, dass die Induktivitäten aus jedem der Arme jedes der beiden Umrichter auf einen gemeinsamen magnetischen Kern aufgebracht sind.

Ausgehend hiervon, besteht die Aufgabe der vorliegenden Erfindung darin, eine Vorrichtung, umfassend mindestens zwei gekoppelte Modulare Multilevel Umrichter, sowie ein Verfahren zur Kopplung von mindestens zwei Modularen Multilevel Umrichtern bereitzustellen, welche Nachteile und Einschränkungen des Standes der Technik zumindest teilweise überwinden.

Insbesondere sollen so eine einfache, flexible und skalierbare Kopplung von mindestens zwei Modularen Multilevel Umrichtern mit Potentialtrennung und Kopplung für unterschiedliche Spannungsniveaus ermöglicht werden, und zwar auch für Topologien, die, wie zum Beispiel die StatCom Topologie, nur über einen einzigen Anschluss verfügen.

Offenbarung der Erfindung

Diese Aufgabe wird durch eine Vorrichtung, umfassend mindestens zwei gekoppelte Modulare Multilevel Umrichter, sowie ein Verfahren zur Kopplung von mindestens zwei Modularen Multilevel Umrichtern gemäß den Merkmalen der unabhängigen Ansprüche gelöst. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Formen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Formen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes kann der entsprechende Begriff "mindestens ein" oder "ein oder mehrere" weggelassen werden, ohne dass hierdurch die Möglichkeit eingeschränkt wird, dass das Merkmal oder Element einfach oder mehrfach vorgesehen sein kann.

Weiterhin werden im Folgenden Begriffe wie "vorzugsweise", "insbesondere", "beispielsweise" in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche, insbesondere der unabhängigen Ansprüche, einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten unangetastet bleiben, die hierdurch eingeleiteten Merkmale mit anderen Merkmalen zu kombinieren, seien es optionale oder nicht-optionale Merkmale.

In einem ersten Aspekt betrifft die vorliegende Erfindung eine Vorrichtung, welche mindestens zwei Modulare Multilevel Umrichter umfasst, welche auf die im Folgenden auf näher beschriebene Weise miteinander gekoppelt sind.

Als "Umrichter", "Wechselstrom-Umrichter" oder "AC/AC-Konverter" wird ein elektrisches Bauelement bezeichnet, welches aus einer ersten Wechselspannung eine sich hiervon durch Amplitude, Phase und/oder Frequenz unterscheidende zweite Wechselspannung erzeugen kann. Damit unterscheiden sich Umrichter von Transformatoren, welche zwar die Amplitude, nicht jedoch Phase und Frequenz der ersten Wechselspannung ändern können.

Der Begriff der "Modularen Multilevel Umrichter", für welche im Folgenden auch nur der Begriff "Umrichter" verwendet wird, bezeichnet hierbei einen Umrichter, welcher über mindestens zwei gesonderte Armen verfügt. Hierbei verfügt jeder der mindestens zwei Arme, die alternativ auch als "Zweige" bezeichnet werden, über eine Reihenschaltung von mindestens zwei Zellen und einer Induktivität. Der Begriff der "Reihenschaltung" oder "Serienschaltung" bezeichnet hierbei eine aufeinanderfolgende Anbringung der mindestens zwei Zellen und der Induktivität innerhalb eines Armes oder Zweiges des Umrichters in einer Weise, dass hierdurch ein einziger Strompfad durch die in Reihe geschalteten Bauelemente ausgebildet wird, welche somit von einem inneren Strom derselben Höhe beaufschlagt werden.

Jede Zelle weist einen steuerbaren Zweipol auf, worunter eine elektrische Schaltung zu verstehen ist, die über zwei extern ansteuerbare Anschlüsse, die auch als "Ausgänge" oder "Klemmen" bezeichnet werden, verfügt. Erfindungsgemäß ist jeder Zweipol als aktiver Zweipol ausgestaltet, d.h. er umfasst sowohl mindestens einen Energiespeicher als auch zwei Ausgänge und ist somit zur Bereitstellung einer elektrischen Spannung oder eines Ausgangsstroms eingerichtet. Damit kann jede Zelle insbesondere dazu eingerichtet sein kann, um elektrischen Spannungen oder Ausgangsströme in verschiedener Höhe bereitzustellen. Wie eingangs erwähnt, können die Zellen insbesondere in Form von Halbbrückenzellen oder Vollbrückenzellen vorliegen, wobei im Rahmen der vorliegenden Erfindung Halbbrückenzellen bevorzugt sein können, da sie im Vergleich zu Vollbrückenzellen nur etwa halb so viele elektronische Bauteile aufweisen.

Zusätzlich zu den mindestens zwei Zellen verfügt jeder Arm des Umrichters über eine Induktivität, die auch als "Drossel" oder "Zweigdrossel" bezeichnet werden kann. Der Begriff der "Induktivität" bezeichnet hierbei ein elektrisches Bauelement, das einen festen oder einen einstellbaren Wert für die elektrische Größe der Selbstinduktivität des elektrischen Bauelements aufweist. Die Selbstinduktivität $L$ des elektrischen Bauelements steht hierbei in einem linearen Zusammenhang zwischen einer Änderungsrate $dI/dt$ eines das elektrische Bauelement durchfließenden elektrischen Stroms $I$ und einer hierdurch in Folge der Selbstinduktivität $L$ des elektrischen Bauelements erzeugten elektrischen Spannung $U$ gemäß Gleichung (1):

$$U = L \cdot dI/dt \qquad\qquad (1)$$

Als Induktivitäten für die vorliegende Erfindung dienen vorzugsweise Spulen. Der Begriff der "Spule" bezeichnet mindestens eine Wicklung oder Windung eines Stromleiters, insbesondere eines Drahtes oder einer Litze, welche zur Isolierung von aneinander liegenden und sich möglicherweise gegenseitig berührenden Teilen vorzugsweise mit einer isolierenden Schicht, insbesondere mit einer Lackschicht versehen sind. Als Material für den Draht kann Kupfer, insbesondere in Form eines Kupferlackdrahtes, eingesetzt werden; andere Materialien sind jedoch ebenfalls möglich. Als "Litze" oder "Hochfrequenzlitze" wird eine Anordnung von feinen, gegeneinander isolierten Einzeldrähten bezeichnet, die bevorzugt derart miteinander verflochten sind, dass im Mittel jeder Einzeldraht jede Stelle in einem Gesamtquerschnitt der Litze möglichst gleich oft einnimmt.

Die Induktivitäten sind erfindungsgemäß auf einen magnetischen Kern, insbesondere auf einen weichmagnetischen Kern, aufgebracht. In einer bevorzugten Ausgestaltung kann hierzu die mindestens eine Wicklung des Stromleiters auf einen Spulenkörper, welche auch als "Spulenträger" bezeichnet wird, aufgebracht sein. Hierbei können insbesondere Anordnung und Form der Wicklung des Stromleiters, Material und Querschnitt des Stromleiters sowie ein für den magnetischen Kern verwendetes Material den Wert für die Selbstinduktivität $L$ der betreffenden Induktivitäten bestimmen. Der magnetische Kern kann bevorzugt die Form eines Ringkernes annehmen, wobei der Ringkern einen geschlossenen Pfad eines sich darin befindlichen Magnetfeldes ermöglicht. Andere Ausgestaltungen des magnetischen Kerns sind jedoch denkbar, insbesondere in Form von Kernblechen oder Pulverkernen. In einer alternativen Ausgestaltung können insbesondere auf einer Leiterplatte angeordnete, in Ferritkerne eingebettete, bevorzugt in Form von Spiralen auf die Leiterplatte aufgebrachte Leiterbahnen als Induktivitäten dienen.

Das für den magnetischen Kern verwendete weichmagnetische Material umfasst bevorzugt ein ferromagnetisches Material, welches insbesondere bei Raumtemperatur (20 °C) ferromagnetische Eigenschaften aufweist, vorzugsweise Eisen, jedoch auch Cobalt, Nickel oder Legierungen hiervon, insbesondere Nickel-Eisen-Legierungen, Cobalt-Eisen-Legierungen oder weitere Legierungen wie FeAl oder FeAlSi, sowie Stähle. Andere weichmagnetische Materialien, darunter Ferrite, insbesondere Eisenoxide, darunter Hämatit ($Fe_2O_3$) oder Magnetit ($Fe_3O_4$), können sich ebenfalls eignen. Weitere magnetische Materialien sind möglich.

Die Arme jedes der Umrichter kann eine durch den Begriff "Topologie" bezeichnete Anordnung einnehmen. Vorzugsweise kann die Topologie hierbei ausgewählt sein aus einer einarmigen Topologie, einer zweiarmigen Topologie, einer Statcom-Topologie oder einer M2C-Topologie. Während die "einarmige Topologie" eine Anordnung der Zellen des Umrichters in Form eines einzigen Armes bezeichnet, bezieht sich die "zweiarmige Topologie" auf eine Anordnung der Zellen des Umrichters in Form von zwei gesonderten Armen. Die "Statcom-Topologie" ist in [2] und die M2C-Topologie in [3] näher beschrieben und wird in den Ausführungsbeispielen beispielhaft eingesetzt. Weniger geeignet für die vorliegende Erfindung sind die eingangs genannten M3C-Topologie, die Hexverter-Topologie und die Nonverter-Topologie. Die mindestens zwei Modularen Multilevel Umrichter, welche gemäß der vorliegenden Erfindung miteinander gekoppelt sind, können, insbesondere nach gewählt Anwendungszweck, hierbei dieselbe Topologie aufweisen oder, in einer alternativen Ausgestaltung, sich in ihrer Topologie voneinander unterscheiden. Für beide Arten dieser Ausgestaltung werden unten jeweils bevorzugte Ausführungsformen vorgestellt.

Erfindungsgemäß erfolgt die Kopplung der mindestens zwei Umrichter derart, dass jeweils mindestens eine der mindestens einen Induktivität aus dem mindestens einen Arm jedes der mindestens zwei Umrichter auf einen gemeinsamen magnetischen Kern aufgebracht ist. In einer besonderen Ausgestaltung können hierbei die mindestens zwei Umrichter derart miteinander gekoppelt sein, dass jede der Induktivitäten aus jedem der Arme jedes der mindestens zwei Umrichter auf dem gemeinsamen magnetischen Kern aufgebracht ist. In einer anderen Ausgestaltung können hierbei die mindestens zwei Umrichter derart miteinander gekoppelt sein, dass nur Induktivitäten aus einigen der Arme, d.h. aus einem einzigen Arm oder, sofern vorhanden, aus zwei, drei oder mehr Armen, der vorhandenen Umrichter auf dem gemeinsamen magnetischen Kern aufgebracht sind. Als der magnetische Kern kann hierbei einer der oben näher beschriebenen weichmagnetischen Kerne, insbesondere ein Eisenkern, dienen, welcher bevorzugt in Form eines Ringkernes vorhanden sein kann. Im Falle, dass eine Vielzahl von Induktivitäten in Form von Spulenwicklungen um den magnetischen Kern aufgebracht ist, kann der hierfür vorgesehene magnetische Kern eine besonders geeignete geometrische Form aufweisen. Ein Beispiel hierfür findet sich unten in den Ausführungsbeispielen. Weitere Ausgestaltungen des magnetischen Kerns sind möglich.

Für einen exemplarischen Fall der Kopplung eines ersten Umrichters, der mindestens zwei erste Arme aufweist, und eines zweiten Umrichters, der über mindestens zwei zweite Arme verfügt, kann dies insbesondere bedeuten, dass zumindest eine erste Induktivität aus einem der ersten Arme des ersten Umrichters und eine zweite Induktivität aus einem der zweiten Arme des zweiten Umrichters gemeinsam auf einen einzigen magnetischen Kern aufgebracht sein können. Dies kann vorzugsweise dadurch erfolgen, dass die jeweils als Spulen ausgeführten ersten und zweiten Induktivitäten gemeinsam auf den einzigen vorhandenen magnetischen Kern gewickelt sind. Weitere exemplarische Fälle mit mehr als zwei Umrichtern, die erfindungsgemäß miteinander gekoppelt werden, sind in analoger Ausgestaltung denkbar.

In einer besonderen Ausgestaltung können hierbei sich die auf dem gemeinsamen magnetischen Kern aufgebrachten Induktivitäten in einem Absolutwert ihrer Selbstinduktivität voneinander unterscheiden. Hierdurch lassen sich die so gekoppelten Umrichter auf unterschiedlichen Spannungsniveaus betreiben. Werden hierbei Spulen als die jeweiligen Induktivitäten eingesetzt, können die unterschiedlichen Selbstinduktivität durch voneinander verschiedene Wicklungszahlen bereitgestellt werden.

Die erfindungsgemäß vorgeschlagene Kopplung der mindestens zwei Umrichter unter Verwendung jeweils mindestens einer Induktivität aus jedem der an der Kopplung beteiligten Umrichter erlaubt insbesondere eine potentialgetrennte Kopplung der betreffenden Umrichter. Hierzu sind die betreffenden Umrichter jeweils an ein zugehöriges Spannungssystem angeschlossen. Der Begriff der "Potentialtrennung" beschreibt hierbei eine Abwesenheit einer direkten elektrischen Leitung zwischen den beteiligten Umrichtern, die jeweils als gesonderte Stromkreise betrachtet werden können, zwischen denen trotz einer fehlenden direkten galvanischen Verbindung dennoch elektrische Leistung und/oder elektrische Signale austauschbar sind. Insgesamt werden jeweils zwei Induktivitäten aus den beteiligten Umrichtern derart magnetisch miteinander gekoppelt, dass interne Ströme des einen Umrichters Energie auf den anderen Umrichter übertragen können. Der Begriff der "inneren Ströme" bezeichnet hierbei einen Stromfluss, welcher ausschließlich innerhalb der Bauelemente eines einzelnen der an der vorliegenden Kopplung beteiligten Umrichter fließen kann.

Durch die erfindungsgemäß vorgeschlagene Kopplung können die Umrichter somit insbesondere eingangs vorgestellte Festkörpertransformatoren, kurz "SST", ausbilden und so auch die damit verbundenen Vorteile aufweisen. Insbesondere lassen sich die so gekoppelten Umrichter in Bezug auf Phasenlage und/oder Frequenz von Spannung und/oder Strom entkoppeln. Damit kann der Leistungsfluss zwischen den so gekoppelten Umrichter geregelt werden. Zudem können die gekoppelten Umrichter Blindleistung erzeugen oder aufnehmen, wodurch sich die elektrische Spannung im Energieverteilnetz beeinflussen lässt. Auch eine Anwendung einer höheren Frequenz als die Netzfrequenz ist möglich, so dass sich eine im Vergleich zur Kopplung durch mindestens einen gesonderten Transformator geringere Menge an magnetischem Material für den gemeinsamen magnetischen Kern einsetzen lässt.

Es wird vorgeschlagen, die auf dem gemeinsamen magnetischen Kern aufgebrachten Induktivitäten aus den einzelnen, an der Kopplung beteiligten Umrichtern derart auszuwählen und derart auf dem gemeinsamen magnetischen Kern aufzubringen, dass die jeweils von den betreffenden Umrichtern erzeugten Ausgangsströme eine Höhe und Richtung aufweisen, dass sie sich derart gegenseitig kompensieren, dass hierdurch kein resultierendes Magnetfeld erzeugt wird, welches den gesamten magnetischen Kern durchsetzt. Der Begriff des "Kompensierens" bedeutet hierbei, dass sich die aus den einzelnen Ausgangsströmen jeweils erzeugten Magnetfelder in Gebieten, in denen mehrere Induktivitäten ein signifikantes Magnetfeld erzeugen, derart gegenseitig aufheben, dass das resultierende Magnetfeld, welches sich als Überlagerung der aus den einzelnen Ausgangsströmen jeweils erzeugten Magnetfelder gedacht werden kann, eine praktisch nicht mehr nachweisbare Induktivität aufweist. Hierbei bezeichnet der Begriff des "Ausgangsstroms" einen Stromfluss, welcher an einem der von außen zugänglichen Anschlüsse eines Armes des beteiligten Umrichters anliegen kann. Da das Magnetfeld in Gebieten, in denen nur eine der Spulen ein signifikantes Magnetfeld hervorruft, jedoch nicht kompensiert wird, weist jede der Spulen eine für Transformatoren typische Streuinduktivität auf. Insbesondere können die auf dem gemeinsamen magnetischen Kern aufgebrachten Induktivitäten derart ausgewählt sein, dass hierdurch eine Energieübertragung zwischen den miteinander gekoppelten Umrichtern nur jeweils über innere Ströme der Umrichter erfolgen kann. Dadurch können in vorteilhafter Weise Verluste bei der Energieübertragung zwischen den miteinander gekoppelten Umrichtern, die durch ein resultierendes Magnetfeld entstehen könnten, vermieden werden. Wie bereits erwähnt, bezeichnet der Begriff der "inneren Ströme" hierbei einen Stromfluss ausschließlich innerhalb der Bauelemente eines einzelnen der beteiligten Umrichter. Bevorzugt können hierbei die inneren Ströme jedes der betreffenden Umrichter auf eine Frequenz einstellbar sein, welche an das für den gemeinsamen magnetischen Kern gewählte magnetische Material angepasst werden. Vorzugsweise liegen die zugehörigen Frequenzen für einen Eisenkern als den gemeinsamen magnetischen Kern in einem Bereich von 100 Hz bis 1 kHz, insbesondere von 200 Hz bis 500 Hz. Für andere ausgewählte magnetische Materialien können jedoch andere Frequenzbereiche vorteilhaft sein.

In einem weiteren Aspekt betrifft die vorliegende Erfindung ein Verfahren zur Kopplung von mindestens zwei Modularen Multilevel Umrichtern. Hierbei weist jeder der Umrichter mindestens zwei Arme auf, wobei jeder der Arme über eine Reihenschaltung von mindestens zwei Zellen und einer Induktivität verfügt, wobei jede Zelle einen steuerbaren Zweipol, welcher einen Energiespeicher und einen Ausgang zur Bereitstellung von unterschiedlichen Spannungen aufweist, umfasst.

Erfindungsgemäß wird hierbei jeweils mindestens eine der mindestens einen Induktivität aus dem mindestens einen Arm jedes der mindestens zwei Umrichter auf einen gemeinsamen magnetischen Kern aufgebracht. In einer besonderen Ausgestaltung können hierbei die mindestens zwei Umrichter derart miteinander gekoppelt werden, dass jede der Induktivitäten aus jedem der Arme jedes der mindestens zwei Umrichter auf den gemeinsamen magnetischen Kern aufgebracht wird. In einer anderen Ausgestaltung können hierbei die mindestens zwei Umrichter derart miteinander gekoppelt werden, dass nur Induktivitäten aus einigen der Arme, d.h. aus einem einzigen Arm oder, sofern vorhanden, aus zwei, drei oder mehr Armen, der vorhandenen Umrichter auf den gemeinsamen magnetischen Kern aufgebracht werden.

In einer besonders bevorzugten Ausgestaltung können die auf den gemeinsamen magnetischen Kern aufgebrachten Induktivitäten derart ausgewählt werden, dass eine Energieübertragung zwischen den miteinander gekoppelten Umrichtern nur jeweils über innere Ströme der Umrichter erfolgt. Hierbei kann insbesondere für die inneren Ströme eine Frequenz eingestellt wird, welche an da magnetische Material des gemeinsamen magnetischen Kerns angepasst werden.

Für weitere Einzelheiten in Bezug auf das vorliegende Verfahren wird auf die Beschreibung der erfindungsgemäßen Vorrichtung verwiesen.

Vorteile der Erfindung

Das vorliegende Verfahren und die beschriebene Vorrichtung eignen sich insbesondere zur potentialfreien Kopplung von Modularen Multilevel Umrichtern, wobei der innere Aufbau der Umrichter grundsätzlich beliebig gewählt werden kann. Dadurch lassen sich Umrichter mit denselben oder mit unterschiedlichen Topographien miteinander koppeln. Auf diese Weise kann eine einfache, flexible und skalierbare Kopplung von mindestens zwei Modularen Multilevel Umrichtern mit Potentialtrennung und Kopplung für unterschiedliche Spannungsniveaus ermöglicht werden, und zwar auch für Topologien, die, wie zum Beispiel die Statcom Topologie, nur über einen einzigen Anschluss verfügen. Damit wird eine Energieübertragung zwischen Spannungssystemen (Netzen), welche an die an der Kopplung beteiligten Umrichter angeschlossen sind, möglich. Aufgrund der vorgeschlagenen Art der Kopplung der Umrichter, für welche eine in den Armen jedes Umrichters sowieso bereits vorhandene Induktivität eingesetzt wird, kann auf zusätzliche Induktivitäten, wie sie beispielsweise durch einen Transformator bereitgestellt werden, verzichtet werden.

Darüber können sich zahlreichen Vorteile der Modularen Multilevel Umrichter auch positiv auf gekoppelte Umrichter dieses Typs auswirken. Die Modularen Multilevel Umrichter verfügen über eine hohe Anzahl an identischen Teilen und lassen sich daher vorteilhaft fertigen. Sie weisen Induktivitäten an allen Anschlüssen auf, wodurch sich Stromsteilheiten begrenzen lassen. Die Anzahl von Spannungsstufen ist nahezu frei wählbar, wodurch sich ein vorteilhaftes Spannungsspektrum einstellen lässt. Außerdem lassen sich die Modularen Multilevel Umrichter durch zusätzliche Zellen und Bypass-Schalter auf einfache Weise mit einer Redundanz versehen.

Kurze Beschreibung der Figuren

Weitere Einzelheiten und Merkmale der vorliegenden Erfindung ergeben sich aus der nachfolgenden Beschreibung von bevorzugten Ausführungsbeispielen, insbesondere in Verbindung mit den abhängigen Ansprüchen. Hierbei können die jeweiligen Merkmale für sich alleine oder zu mehreren in Kombination miteinander verwirklicht sein. Die Erfindung ist jedoch nicht auf die Ausführungsbeispiele beschränkt. Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente.

Im Einzelnen zeigen:

Figur 1          ein Blockschaltbild einer Vorrichtung, welche zwei erfindungsgemäß gekoppelte Modulare Multilevel Umrichter umfasst;

Figur 2          ein Blockschaltbild eines bevorzugten Ausführungsbeispiels mit zwei erfindungsgemäß gekoppelten Statcom-Umrichtern;

Figuren 3A bis 3D    jeweils ein Blockschaltbild von vier verschiedenen, bevorzugten Ausführungsbeispielen mit zwei erfindungsgemäß auf verschiedene Weise gekoppelten M2C-Umrichtern; und

Figur 4          ein Blockschaltbild eines bevorzugten Ausführungsbeispiels für eine Kopplung eines einphasigen Systems mit einem dreiphasigen Systems mittels geeigneter Umrichter.


Beschreibung der Ausführungsbeispiele

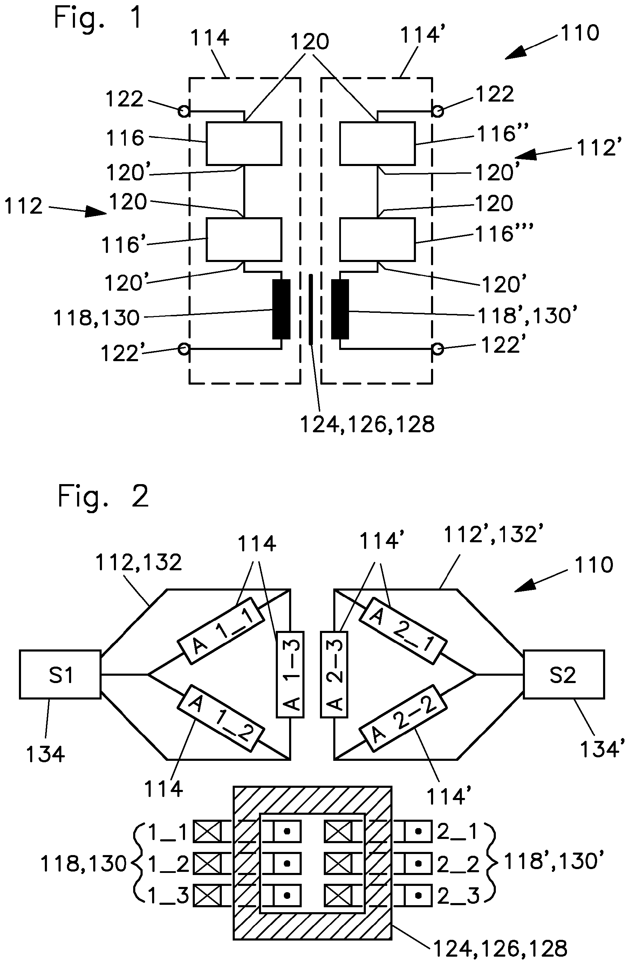

Figur 1 zeigt ein Blockschaltbild einer Vorrichtung 110, welche zwei erfindungsgemäß gekoppelte Modulare Multilevel Umrichter 112, 112' umfasst. In der Darstellung gemäß Figur 1 verfügt jeder der gekoppelten Umrichter 112, 112' über eine einarmige Topologie, welche genau einen Arm 114, 114' umfasst. Im Allgemeinen kann jeder der gekoppelten Umrichter 112, 112' grundsätzlich jedoch eine beliebige Anzahl von Armen aufweisen. Beispiele für Umrichter, welche über zwei, drei oder sechs Arme verfügen, die zudem in unterschiedlichen Topologien angeordnet sein können, finden sich in den nachfolgenden Figuren 2 bis 4.

Der Arm 114, 114' jeder der beiden Umrichter 112, 112' weist jeweils zwei Zellen 116, 116' bzw. 116", 116'" sowie eine Induktivität 118, 118' auf, welche in Form einer Reihenschaltung angeordnet sind. Hierdurch kann in jedem der Arme 114, 114' jeweils ein einziger Strompfad durch die jeweils in Reihe geschalteten beiden Zellen 116, 116' bzw. 116", 116'" und die jeweils zugehörige Induktivität 118 oder 118' ausgebildet sein, die somit von einem inneren Strom jeweils derselben Höhe für jeden der der beiden Umrichter 112, 114' beaufschlagbar sind. Hierbei verfügt jede der Zellen 116, 116', 116", 116'" über einen steuerbaren aktiven Zweipol, welcher mindestens einen Energiespeicher (nicht dargestellt) sowie zwei Klemmen 120, 120' zur Bereitstellung einer einstellbaren elektrischen Spannung aufweist. Wie beispielsweise in [1] näher erläutert, können die Zellen 116, 116', 116", 116'" hierzu insbesondere in Form von Halbbrückenzellen oder Vollbrückenzellen vorliegen, wobei Halbbrückenzellen im Rahmen der vorliegenden Erfindung bevorzugt sind, da sie nur etwa halb so viele elektronische Bauteile wie Vollbrückenzellen aufweisen.

Durch die Anordnung der beiden Zellen 116, 116' bzw. 116", 116" sowie der jeweils zugehörigen Induktivität 118 bzw. 118' in jedem der Arme 114, 114' in Form der Reihenschaltung verfügt jeder der Arme 114, 114' über genau zwei Ausgänge 122, 122'. Diese Ausgänge 122, 122' können im Falle des Vorhandenseins einer Topologie, welche über mehrere Arme verfügt, für Anschlüsse zu weiteren Armen oder als Ausgänge 122, 122' für einen der beiden Umrichter 112, 112' dienen. In der Darstellung gemäß Figur 1 können in Folge der dort gewählten einarmigen Topologie die Ausgänge 122, 122' gleichzeitig auch als Ausgänge der beiden Umrichter 112, 112' betrachtet werden können. Mittels der Ausgänge 122, 122' lassen sich die beiden Umrichter 112, 112' jeweils an ein zugehöriges Spannungssystem (in Figur 1 nicht dargestellt) anschließen.

Erfindungsgemäß sind die mindestens zwei Umrichter 112, 112' derart miteinander gekoppelt, dass die jeweilige Induktivität 118, 118' aus dem jeweiligen Arm 114, 114' jedes der beiden Umrichter 112, 112' auf einen gemeinsamen magnetischen Kern 124 aufgebracht ist. Da in der Darstellung gemäß Figur 1 jeder der beiden Umrichter 112, 112' jeweils nur über genau einen der Arme 114, 114' mit jeweils genau einer der Induktivitäten 118, 118' verfügt, ist hiermit folglich jede der Induktivitäten 118, 118' aus jedem der Arme 114, 114' jedes der beiden Umrichter 112, 112' auf dem gemeinsamen magnetischen Kern 124 aufgebracht. In mehrarmigen Topologien können jedoch auch Ausführungen existieren, in welchen die Umrichter derart miteinander gekoppelt sein können, dass nur Induktivitäten aus einigen der Arme auf dem gemeinsamen magnetischen Kern 124 aufgebracht sind.

Als der gemeinsame magnetische Kern 124 kann hierbei einer der oben näher beschriebenen weichmagnetischen Kerne, insbesondere ein Eisenkern 126, dienen, welcher bevorzugt in Form eines Ringkernes 128 vorhanden sein kann. Andere Ausgestaltungen des gemeinsamen magnetischen Kerns 124 sind jedoch denkbar, insbesondere in Form von Kernblechen oder Pulverkernen. Für den gemeinsamen magnetischen Kern 124 kann grundsätzlich jedes weichmagnetische Material verwendet werden, insbesondere wenn es bei Raumtemperatur (20 °C) ferromagnetisch ist. Dazu gehören Eisen, Cobalt, Nickel, Nickel-Eisen-Legierungen, Cobalt-Eisen-Legierungen, FeAl- oder FeAlSi-Legierungen sowie Stähle. Andere weichmagnetische Materialien, darunter Ferrite, insbesondere Eisenoxide wie Hämatit (FeO) oder Magnetit ($Fe_3O_4$), können sich ebenfalls eignen.

Es wird vorgeschlagen, die auf dem gemeinsamen magnetischen Kern 124 aufgebrachten Induktivitäten 118, 118' derart auszuwählen und derart auf dem gemeinsamen magnetischen Kern 124 aufzubringen sein, dass Ausgangsströme der beiden Umrichter 112, 112' außer einem Streufeld kein resultierendes Magnetfeld ergeben, welches den gesamten magnetischen Kern 124 durchsetzt. Vielmehr kann eine Energieübertragung zwischen den erfindungsgemäß gekoppelten Umrichtern 112, 112' jeweils nur über die inneren Ströme in den jeweiligen Zellen 114, 114' der Umrichter 112, 112' erfolgen. Dadurch lassen sich Verluste bei der Energieübertragung zwischen den miteinander gekoppelten Umrichtern 112, 112', die durch ein resultierendes Magnetfeld entstehen könnten, vermeiden. Besonders bevorzugt kann hierzu für die inneren Ströme eine Frequenz eingestellt werden, die an das magnetische Material des gemeinsamen magnetischen Kern 124 angepasst ist. Für den für Eisenkern 126 können die zugehörigen Frequenzen hierbei in einem Bereich von 100 Hz bis 1 kHz, insbesondere von 200 Hz bis 500 Hz, liegen.

Weiterhin können sich die auf dem gemeinsamen magnetischen Kern 124 aufgebrachten Induktivitäten 118, 118' in einem Absolutwert ihrer Selbstinduktivität voneinander unterscheiden, insbesondere für den Fall, dass die auf dem gemeinsamen magnetischen Kern 124 aufgebrachten Induktivitäten 118, 118' in Form von Spulen 130, 130' vorliegen, indem sich die Spulen 130, 130' in einer Anzahl ihrer Wicklungen um den gemeinsamen magnetischen Kern 124 voneinander unterscheiden. Auf diese Weise lassen sich die so gekoppelten Umrichter 112, 112' auf unterschiedlichen Spannungsniveaus betreiben. Alternativ können auch in Ferritkerne eingebettete, spiralförmig auf eine Leiterplatte aufgebrachte Leiterbahnen als die Induktivitäten 118, 118' dienen.

Figur 2 zeigt ein Blockschaltbild der Vorrichtung 110, welche zwei erfindungsgemäß gekoppelte Statcom-Umrichter 132, 132' umfasst, die jeweils an ein Spannungssystem S1, S2, das vorzugsweise in Form eines Netzes 134, 134' vorliegen kann, angeschlossen sind. Damit kann durch eine Vermittlung der beiden an der Kopplung beteiligten Statcom-Umrichtern 132, 132' insbesondere eine Energieübertragung zwischen den hieran jeweils angeschlossenen Spannungssystemen S1, S2 bzw. Netzen 134, 134' erfolgen. Wie beispielsweise in [2] beschrieben, weist jeder der Statcom-Umrichter 132, 132' drei Arme A 1_1, A 1_2, A 1_3 bzw. A 2_1, A 2_2, A 2_3 auf, die in Form eines Dreiecks angeordnet und an ihren Ausgängen in einer im oberen Teil der Figur 2 dargestellten Weise elektrisch leitend miteinander verbunden sind.

Im unteren Teil der Figur 2 ist der Eisenkern 126 als der gemeinsame magnetische Kern 124 in Form eines Ringkerns 128 erkennbar, welcher hier in schematischer Darstellung sowohl von ersten Wicklungen 1_1, 1_2, 1_3 der Induktivitäten 118 aus den drei Armen A 1_1, A 1_2, A 1_3 des ersten Statcom-Umrichters 132 als auch von zweiten Wicklungen 2_1, 2_2, 2_3 der Induktivitäten 118' aus den drei Armen A 2_1, A 2_2, A 2_3 des zweiten Statcom-Umrichters 132' umgeben ist. Somit sind in dem Ausführungsbeispiel gemäß Figur 2 jede der Induktivitäten 118, 118' aus jedem der Arme 114, 114' jedes der beiden Umrichter 132, 132' auf dem gemeinsamen magnetischen Kern 124 aufgebracht. Hierbei bezeichnet der in einem rechteckigen Kästchen eingerahmte Punkt einen Stromfluss in Richtung des Betrachters, während das ebenfalls in einem rechteckigen Kästchen eingerahmte Kreuz einen Stromfluss aus der Richtung des Betrachters bezeichnet. Die hier jeweils schematisch dargestellte einzige Wicklung der zugehörigen Spulen 130, 130' steht repräsentativ für die gesamten Induktivitäten 118, 118'. Die schematische Darstellung des Stromflusses zeigt jedoch eine Anordnung, in welcher sich die resultierenden Magnetfelder der dargestellten Ströme praktisch so aufheben, so dass die Energieübertragung zwischen den gekoppelten Statcom-Umrichtern 132, 132' jeweils nur über die inneren Ströme erfolgen kann, wodurch Verluste bei der Energieübertragung vermieden werden können.

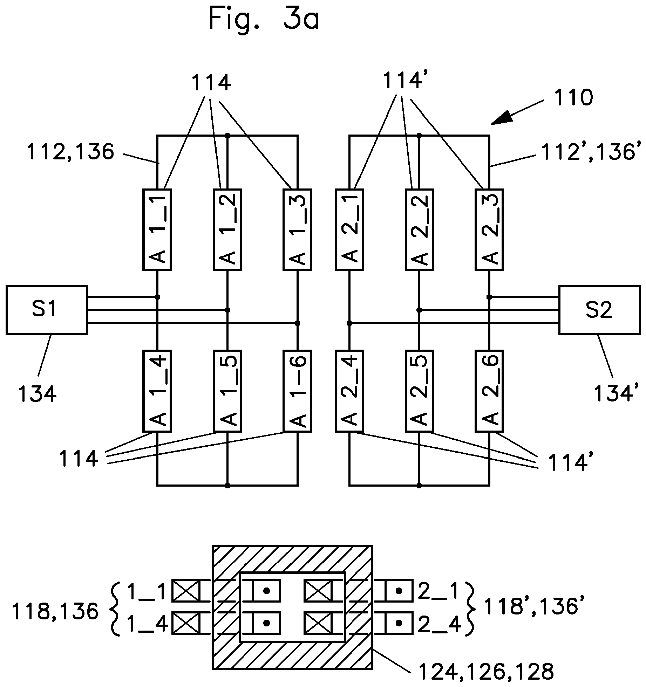

Die Figuren 3A bis 3D zeigen jeweils ein Blockschaltbild der Vorrichtung 110, welche jeweils zwei erfindungsgemäß gekoppelte M2C-Umrichter 136, 136' umfasst, die jeweils an ein Spannungssystem S1, S2, das auch hier vorzugsweise in Form eines Netzes 134, 134' vorliegen kann, angeschlossen sind. wodurch eine Energieübertragung zwischen den hieran jeweils angeschlossenen Spannungssystemen S1, S2 bzw. Netzen 134, 134' erfolgen kann. Wie beispielsweise in [3] beschrieben, weist jeder der M2C-Umrichter 136, 136' sechs Arme A 1_1, A 1_2, A 1_3, A 1_4, A 1_5, A 1_6 bzw. A 2_1, A 2_2, A 2_3, A 2_4, A 2_5, A 2_6 auf, die an ihren Ausgängen in einer jeweils im oberen Teil der Figuren 3A bis 3D dargestellten Weise elektrisch leitend miteinander verbunden sind.

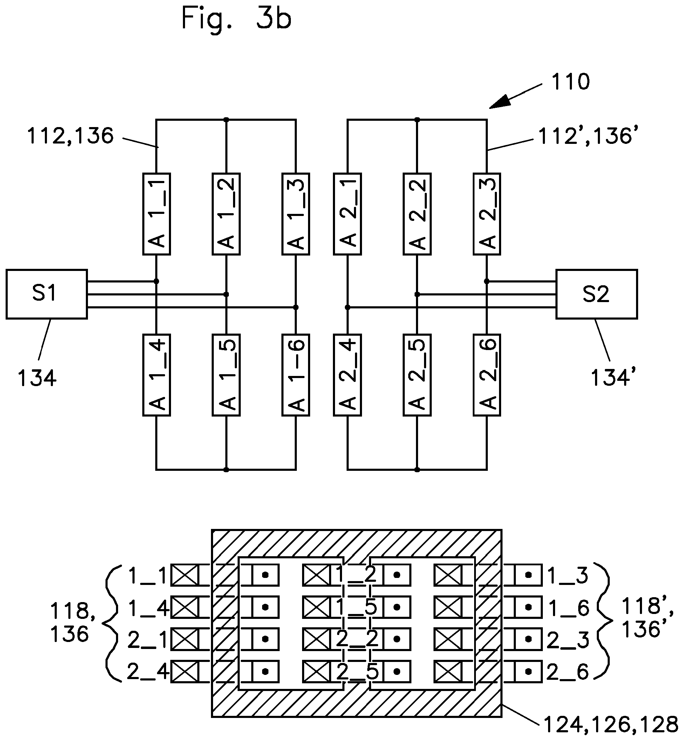

Im unteren Teil der Figuren 3A bis 3D ist jeweils der Eisenkern 126 als der gemeinsame magnetische Kern 124 in Form eines Ringkerns 128 erkennbar. Während in der Anordnung gemäß Figur 3A nur jeweils die beiden Arme A 1_1 und A 1_4 des ersten M2C-Umrichters 136 und die beiden Arme A 2_1 und A 2_4 des zweiten M2C-Umrichters 136' mittels der ersten Wicklungen 1_1 und 1_4 der Induktivitäten 118 des ersten M2C-Umrichters 136 und mittels der zweiten Wicklungen 2_1 und 2_4 der Induktivitäten 118'des zweiten M2C-Umrichters 136' zur Kopplung verwendet werden, werden in den Anordnungen gemäß den Figur 3B bis 3D jeweils alle Arme A1_1, A 1_2, A 1_3, A 1_4, A 1_5, A 1_6 des ersten M2C-Umrichters 136 und alle Arme A 2_1, A 2_2, A 2_3, A 2_4, A 2_5, A 2_6 des zweiten M2C-Umrichters 136' entsprechend zur Kopplung der beiden M2C-Umrichter 136, 136' eingesetzt. Eine Kopplung von jeweils nur einem der Arme 114, 114' aus jedem der Umrichter 112, 112' erscheint weniger sinnvoll, da dann ein Ausgangsstrom an der Kopplung beteiligt wäre, so dass sich eine Frequenz des Magnetfeldes nicht mehr frei wählen ließe.

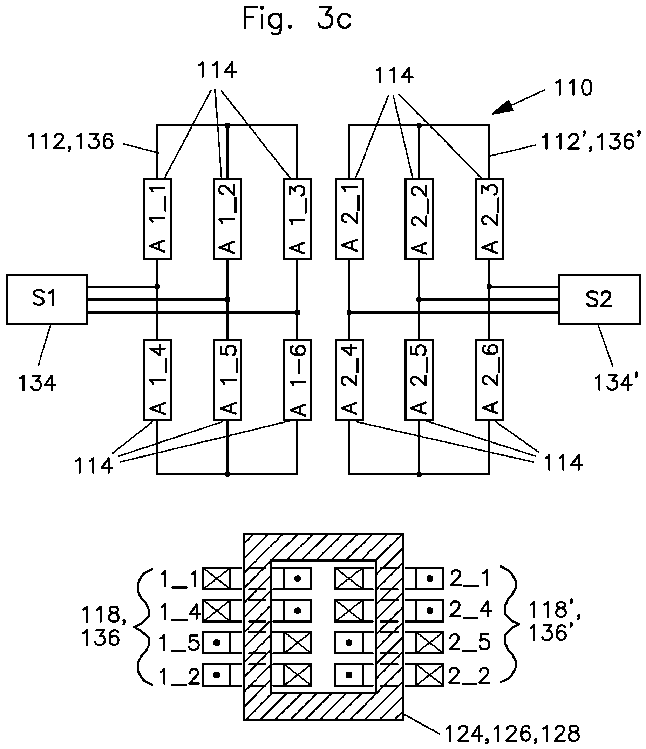

Während die Anordnung aus Figur 3B der Anordnung für die gekoppelten Statcom-Umrichter 132, 132' aus Figur 2 entspricht, werden in der Anordnung gemäß Figur 3C die inneren Ströme anders geschaltet. Bei dieser Anordnung treten in dem ersten M2C-Umrichter 136 zwei innere Ströme, nämlich ein erster innerer Strom in eine Richtung durch die Arme A 1_1 und A 1_4 und in entgegengesetzter Richtung durch die Arme A 1_2 und A 1_5 sowie ein zweiter innerer Strom in eine Richtung durch die Arme A 1_3 und A 1_6 und in entgegengesetzter Richtung durch die Arme A 1_1, A 1_2, A 1_4 und A 1_5. Durch die in Figur 3C dargestellte magnetische Kopplung ergibt sich, dass nur ein innerer Strom durch die Arme A 1_1, A 1_2, A 1_4 und A 1_5 ein Magnetfeld hervorruft. Im Gegensatz hierzu heben sich durch die umgekehrten Wicklungsrichtungen der Spulen 1_2 und 1_5 die Magnetfelder für den zweiten inneren Strom, welcher die Spulen 1_1, 1_2, 1_4 und 1_5 in der gleichen Richtung durchfließt, auf. Analog treten in dem zweiten M2C-Umrichter 136' ebenfalls zwei innere Ströme, nämlich ein erster innerer Strom in eine Richtung durch die Arme A 2_1 und A 2_4 und in entgegengesetzter Richtung durch die Arme A 2_2 und A 2_5 sowie ein zweiter innerer Strom in eine Richtung durch die Arme A 2_3 und A 2_6 und in entgegengesetzter Richtung durch die Arme A 2_1, A 2_2, A 2_4 und A 2_5 mit den analogen Wirkungen in Bezug auf das hierdurch erzeugte Magnetfeld auf. Aufgrund dieser Anordnung koppeln die beiden Umrichter 136, 136' für die jeweils zweiten inneren Ströme nicht. Die jeweils zweiten inneren Ströme stehen jedoch auch weiterhin für eine Beeinflussung einer Energieverteilung in jedem der beiden M2C-Umrichter 136, 136', insbesondere im Hinblick auf eine möglichst symmetrische Verteilung der Energie innerhalb jedes der der beiden M2C-Umrichter 136, 136', zur Verfügung.

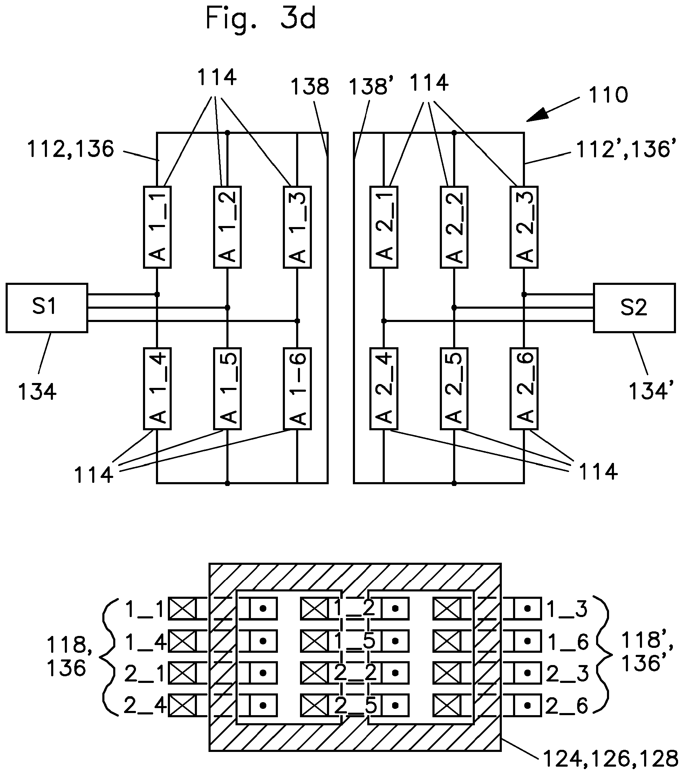

In der Anordnung gemäß Figur 3D verfügt jeder der der beiden M2C-Umrichter 136, 136' im Unterschied zu den Anordnungen gemäß den Figuren 3A bis 3C über einen zusätzlichen Strompfad 138 bzw. 138', durch welchen im ersten M2C-Umrichter 136 die Arme A1_1, A 1_2, A 1_3 mit den Armen A 1_4, A 2_5, A 1_6 und im zweiten M2C-Umrichter 136' die Arme A2_1, A 2_2, A 2_3 mit den Armen A 2_4, A 2_5, A 2_6 jeweils zusätzlich miteinander verbunden werden, insbesondere um eine möglichst symmetrische Verteilung der Energie innerhalb jedes der der beiden M2C-Umrichter 136, 136' zu erzielen. Die zusätzlichen Strompfade 138, 138' in der Anordnung gemäß Figur 3D können in vorteilhafter Weise dazu beitragen, um eine in der Praxis aufgrund von Toleranzen der insbesondere Kapazitäten in den einzelnen Armen 114, 114' auftretenden ungleichen Verteilung von elektrischen Ladungen in den einzelnen Armen 114, 114' entgegenzuwirken. Dies kann insbesondere dadurch erfolgen, dass die zusätzlichen Strompfade 138, 138' einen weiteren Ladungsausgleich zwischen so miteinander verbundenen Armen 114, 114' hervorrufen können.

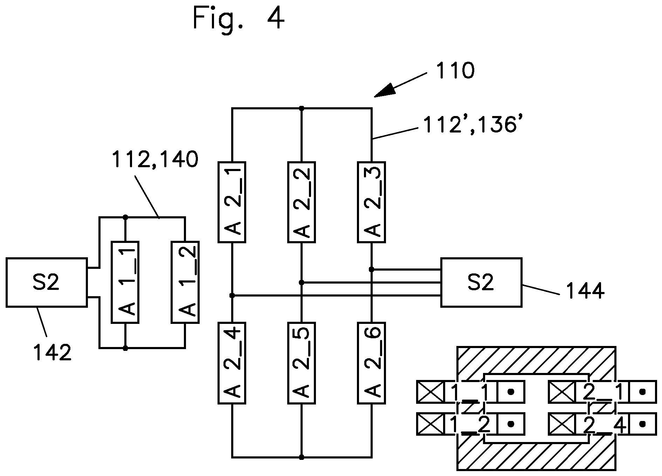

Figur 4 zeigt ein Blockschaltbild der weiteren Vorrichtung 110, in welcher die Kopplung von zwei unterschiedlichen Typen von Umrichtern 112, 112' schematisch dargestellt ist. Beispielhaft werden hier ein M2C-Umrichter 136 und ein zweiarmiger Umrichter 140 erfindungsgemäß miteinander gekoppelt. Eine Kopplung von anderen Arten jeweils unterschiedlicher Umrichter 112, 112' erscheint jedoch ebenfalls möglich.

In der Ausführung gemäß Figur 4 ist der zweiarmige Umrichter 140 an ein einphasiges Spannungssystem 142 angeschlossen, während der M2C-Umrichter 136 an ein dreiphasiges Spannungssystem 144 angeschlossen ist. Durch die Kopplung der beiden Umrichter 136, 140 kann hierbei insbesondere eine Energieübertragung zwischen dem hieran jeweils angeschlossenen einphasigen Spannungssystem 142 und dem dreiphasigen Spannungssystem 142 erfolgen. Einsatzbereiche hierfür können insbesondere Haushaltsgeräte mit rotierenden Teilen sowie Traktionsantriebe im Bahnbereich sein. Weitere Anwendungen sind denkbar. Hierbei erfolgt die Kopplung über jeweils zwei Arme A 1_1 und A 1_2 bzw. A 2_1 und A 2_4 der beiden Umrichter 112, 112'. Anstelle der beiden Arme A 2_1 und A 2_4 des zweiten Umrichters 112' kann hier alternativ auch eine Kombination von zwei anderen Armen verwendet werden.

Für weitere Einzelheiten in Bezug auf die Figuren 3A bis 3D und 4 wird auf die Beschreibung der Figuren 1 und 2 verwiesen.

Bezugszeichenliste

| 110 | Vorrichtung |
|---|---|
| 112, 112' | Umrichter |
| 114, 114' | Arm, Zweig |
| 116, 116', 116", 116''' | Zelle |
| 118, 118' | Induktivität, Zweigdrossel |
| 120, 120' | Klemme |
| 122, 122' | Ausgang |
| 124 | gemeinsamer magnetische Kern |
| 126 | Eisenkern |
| 128 | Ringkern |
| 130, 130' | Spule |
| 132, 132' | Statcom-Umrichter |
| 134, 134' | Netz |
| 136, 136' | M2C-Umrichter |
| 138, 138' | zusätzlicher Strompfad |

| 140 | zweiarmiger Umrichter |
|---|---|
| 142 | einphasiges Spannungssystem |
| 144 | dreiphasiges Spannungssystem |

Literaturliste

[1] Georgios Konstantinon, Jiaqi Zhang, Salvador Ceballos et al, "Comparison and evaluation of sub-module configurations in modular multilevel converters". In: S. 958-963. DOI: 10.1109/PEDS. 2015. 7203440.

[2] H. Akagi, "Classification, Terminology, and Application of the Modular Multilevel Cascade Converter (MMCC)". In: IEEE Transactions on Power Electronics 26.11 (Nov. 2011), S. 3119-3130. ISSN: 0885-8993. DOI: 10.1109/TPEL.2011.2143431.

[3] Johannes Kolb, "Optimale Betriebsführung des Modularen Multilevel-Umrichters als Antriebsumrichter für Drehstrommaschinen". Zugl.: Karlsruhe, KIT, Diss. 2013. Diss. Karlsruhe, 2014. ISBN: 978-3-7315-0183-1. DOI: 10.5445/KSP/1000039063.

[4] Felix Kammerer. "Systemanalyse und Regelung des Modularen Multilevel Matrix Umrichters als Antriebsumrichter". 2016. DOI: 10.5445/IR/1000055761.

[5] D. Karwatzki, L. Barnschka und A. Mertens, "Survey on the Hexverter topology; A modular multilevel AC/AC converter". In: 2015 9th International Conference on Power Electronics and ECCE Asia (ICPE-ECCE Asia). Juni 2015, S. 1075-1082. DOI: 10.1109/ICPE.2015.7167914.

[6] Shigenori Inoue und Hirofumi Akagi, "A Bidirectional Isolated DC-DC Converter as a Core Circuit of the Next.-Generation Medium-Voltage Power Conversion System". In: IEEE Transactions on Power Electronics 22.2 (März 2007), S. 535-542. DOI: 10.1109/TPEL.2006.889939.

[7] Shunsuke Tamada, Yosuke Nakazawa und Shoichi Irokawa, "A proposal of Modular Multilevel Converter applying three winding transformers". In: 2014 International Power Electronics Conference (IPEC-Hiroshima 2014 - ECCE ASIA). IEEE, Mai 2014. DOI: 10.1109/IPEC.2014.6869762.

[8] C. Oates, "A methodology for developing 'Chainlink' converters". In: Proc. 13th European Conf. Power Electronics and Applications EPE '09, Sep. 2009, S. 1-10.

[9] S. Falcones, Xiaolin Mao und R Ayyanar, "Topology comparison for Solid State Transformer implementation". In: IEEE PES General Meeting. IEEE, Juli 2010. DOI: 10.1109/pes.2010.5590086.

[10] S. V. G. Oliveira, D. G. Castellani, Y. de Novacs et al., "AC-AC modular multilevel converter applied to solid-state transformers". In: Proc. IEGON 2014 - 40th Annual Conf. of the IEEE Industrial Electronics Society. Okt. 2014, S. 1174-1180. DOI: 10.1109/IECON.2014.7048651.

**Patentansprüche**

1. Vorrichtung (110), umfassend mindestens zwei Modulare Multilevel Umrichter (112, 112'), wobei jeder der Umrichter (112, 112') mindestens einen Arm (114, 114') aufweist, wobei der Arm (114, 114') über eine Reihenschaltung von mindestens zwei Zellen (116. 116', 116", 116''') und einer Induktivität (118, 118') verfügt, wobei jede Zelle (116. 116', 116", 116''') einen steuerbaren aktiven Zweipol, welcher mindestens einen Energiespeicher und zwei Ausgänge (122, 122') zur Bereitstellung einer elektrischen Spannung aufweist, umfasst, wobei die mindestens zwei Umrichter (112, 112') derart miteinander gekoppelt sind, dass jeweils mindestens eine der mindestens einen Induktivität (118, 118') aus dem mindestens einen Arm (114, 114') jedes der mindestens zwei Umrichter (112, 112') auf einen gemeinsamen magnetischen Kern (124) aufgebracht ist, **dadurch gekennzeichnet, dass** die auf dem gemeinsamen magnetischen Kern (124) aufgebrachten Induktivitäten (118, 118') derart ausgewählt und derart auf dem gemeinsamen magnetischen Kern (124) aufgebracht sind, dass Ausgangsströme der mindestens zwei Umrichter (112, 112') kein resultierendes Magnetfeld ergeben.

**2.** Vorrichtung (110) nach dem vorangehenden Anspruch, wobei die mindestens zwei Umrichter (112, 112') derart miteinander gekoppelt sind, dass jede der Induktivitäten (118, 118') aus jedem der Arme (114, 114') jedes der mindestens zwei Umrichter (112, 112') auf dem gemeinsamen magnetischen Kern (124) aufgebracht ist.

**3.** Vorrichtung (110) nach einem der vorangehenden Ansprüche, wobei die auf dem gemeinsamen magnetischen Kern (124) aufgebrachten Induktivitäten (118, 118') derart ausgewählt sind, dass eine Energieübertragung zwischen den miteinander gekoppelten Umrichtern (112, 112') nur jeweils über innere Ströme der Umrichter (112, 112') ausführbar ist.

**4.** Vorrichtung (110) nach dem vorangehenden Anspruch, wobei für die inneren Ströme eine Frequenz einstellbar ist, welche an ein magnetisches Material, über das der gemeinsame magnetische Kern (124) verfügt, anpassbar ist.

**5.** Vorrichtung (110) nach dem vorangehenden Anspruch, wobei das magnetische Material ein weichmagnetisches Material umfasst, das bei Raumtemperatur ferromagnetische Eigenschaften aufweist.

**6.** Vorrichtung (110) nach dem vorangehenden Anspruch, wobei das weichmagnetische Material ausgewählt ist aus Eisen, Cobalt, Nickel, Nickel-Eisen-Legierungen, Cobalt-Eisen-Legierungen, FeAl- Legierungen, FeAlSi-Legierungen, Stählen oder Ferriten.

**7.** Vorrichtung (110) nach einem der vorangehenden Ansprüche, wobei der gemeinsame magnetische Kern (124) in Form eines Ringkernes (128), in Form von Kernblechen oder als Pulverkern vorhanden ist.

**8.** Vorrichtung (110) nach einem der vorangehenden Ansprüche, wobei die auf dem gemeinsamen magnetischen Kern (124) aufgebrachten Induktivitäten (118, 118') sich in einem Absolutwert ihrer Selbstinduktivität voneinander unterscheiden.

**9.** Vorrichtung (110) nach dem vorangehenden Anspruch, wobei die auf dem gemeinsamen magnetischen Kern (124) aufgebrachten Induktivitäten (118, 118') in Form von Spulen (130, 130') vorliegen, welche sich in einer Anzahl ihrer Wicklungen voneinander unterscheiden.

**10.** Vorrichtung (110) nach einem der vorangehenden Ansprüche, wobei die Arme (114, 114') jedes der Umrichter (112, 112') eine Topologie aufweisen, welche ausgewählt ist aus einer einarmigen Topologie, einer zweiarmigen Topologie, einer Statcom-Topologie oder einer M2C-Topologie.

**11.** Vorrichtung (110) nach dem vorangehenden Anspruch, wobei die miteinander gekoppelten Umrichter (112, 112') dieselbe Topologie aufweisen.

**12.** Vorrichtung (110) nach einem der vorangehenden Ansprüche, wobei jeder der Umrichter (112, 112') jeweils an ein Spannungssystem, das in Form eines Netzes (134, 134') vorliegt, angeschlossen ist

**13.** Verfahren zur Kopplung von mindestens zwei Modularen Multilevel Umrichtern (112, 112'), wobei jeder der Umrichter (112, 112') mindestens einen Arm (114, 114') aufweist, wobei der Arm (114, 114') über eine Reihenschaltung von mindestens zwei Zellen (116, 116', 116", 116''') und einer Induktivität (118, 118') verfügt, wobei jede Zelle (116, 116', 116", 116''') einen steuerbaren Zweipol, welcher mindestens einen Energiespeicher und zwei Ausgänge (122, 122') zur Bereitstellung einer elektrischen Spannung aufweist, umfasst, wobei jeweils mindestens eine der mindestens einen Induktivität (118, 118') aus dem mindestens einen Arm (114, 114') jedes der mindestens zwei Umrichter (112, 112') auf einen gemeinsamen magnetischen Kern (124) aufgebracht wird, **dadurch gekennzeichnet, dass** die auf dem gemeinsamen magnetischen Kern (124) aufgebrachten Induktivitäten (118, 118') derart ausgewählt und derart auf dem gemeinsamen magnetischen Kern (124) aufgebracht werden, dass Ausgangsströme der mindestens zwei Umrichter (112, 112') kein resultierendes Magnetfeld ergeben.

**14.** Verfahren nach dem vorangehenden Anspruch, wobei die auf dem gemeinsamen magnetischen Kern (124) aufgebrachten Induktivitäten (118, 118') derart ausgewählt werden, dass eine Energieübertragung zwischen den miteinander gekoppelten Umrichtern (112, 112') nur jeweils über innere Ströme der Umrichter (112, 112') erfolgt.

**15.** Verfahren nach dem vorangehenden Anspruch, wobei für die inneren Ströme eine Frequenz eingestellt wird, welche an ein magnetisches Material, über das der gemeinsame magnetische Kern (124) verfügt, angepasst wird.

**Claims**

1.  Device (110), comprising at least two modular multilevel converters (112, 112'), wherein each of the converters (112, 112') has at least one arm (114, 114'), wherein the arm (114, 114') has a series circuit formed by at least two cells (116, 116', 116", 116"') and one inductance (118, 118'), wherein each cell (116, 116', 116", 116"') comprises a controllable active two-terminal network having at least one energy store and two outputs (122, 122') for providing an electrical voltage, wherein the at least two converters ((112, 112') are coupled to one another in such a way that in each case at least one of the at least one inductance (118, 118') from the at least one arm (114, 114') of each of the at least two converters (112, 112') is applied to a common magnetic core (124), **characterized in that** the inductances (118, 118') applied on the common magnetic core (124) are selected and applied on the common magnetic core (124) in such a way that output currents of the at least two converters (112, 112') do not give rise to a resulting magnetic field.

2.  Device (110) according to the preceding claim, wherein the at least two converters (112, 112') are coupled to one another in such a way that each of the inductances (118, 118') from each of the arms (114, 114') of each of the at least two converters (112, 112') is applied on the common magnetic core (124) .

3.  Device (110) according to either of the preceding claims, wherein the inductances (118, 118') applied on the common magnetic core (124) are selected in such a way that an energy transfer between the converters (112, 112') coupled to one another is implementable only in each case by way of internal currents of the converters (112, 112').

4.  Device (110) according to the preceding claim, wherein a frequency that is adaptable to a magnetic material of the common magnetic core (124) is settable for the internal currents.

5.  Device (110) according to the preceding claim, wherein the magnetic material comprises a soft-magnetic material having ferromagnetic properties at room temperature.

6.  Device (110) according to the preceding claim, wherein the soft-magnetic material is selected from iron, cobalt, nickel, nickel-iron alloys, cobalt-iron alloys, FeAl alloys, FeAlSi alloys, steels or ferrites.

7.  Device (110) according to any of the preceding claims, wherein the common magnetic core (124) is present in the form of a toroidal core (128), in the form of core sheets or as a powder core.

8.  Device (110) according to any of the preceding claims, wherein the inductances (118, 118') applied on the common magnetic core (124) differ from one another in an absolute value of their self-inductance.

9.  Device (110) according to the preceding claim, wherein the inductances (118, 118') applied on the common magnetic core (124) are present in the form of coils (130, 130') that differ from one another in a number of their windings.

10. Device (110) according to any of the preceding claims, wherein the arms (114, 114') of each of the converters (112, 112') have a topology selected from a one-arm topology, a two-arm topology, a Statcom topology or an M2C topology.

11. Device (110) according to the preceding claim, wherein the converters (112, 112') coupled to one another have the same topology.

12. Device (110) according to any of the preceding claims, wherein each of the converters (112, 112') is connected in each case to a voltage system present in the form of a network (134, 134').

13. Method for coupling at least two modular multilevel converters (112, 112'), wherein each of the converters (112, 112') has at least one arm (114, 114'), wherein the arm (114, 114') has a series circuit formed by at least two cells (116, 116', 116", 116"') and one inductance (118, 118'), wherein each cell (116, 116', 116", 116"') comprises a controllable active two-terminal network having at least one energy store and two outputs (122, 122') for providing an electrical voltage, wherein in each case at least one of the at least one inductance (118, 118') from the at least one arm (114, 114') of each of the at least two converters (112, 112') is applied to a common magnetic core (124), **characterized in that** the inductances (118, 118') applied on the common magnetic core (124) are selected and applied on the common magnetic core (124) in such a way that output currents of the at least two converters (112, 112') do not give rise to a resulting magnetic field.

**14.** Method according to the preceding claim, wherein the inductances (118, 118') applied on the common magnetic core (124) are selected in such a way that an energy transfer between the converters (112, 112') coupled to one another is effected only in each case by way of internal currents of the converters (112, 112').

**15.** Method according to the preceding claim, wherein a frequency adapted to a magnetic material of the common magnetic core (124) is set for the internal currents.


**Revendications**

**1.** Dispositif (110), comprenant au moins deux convertisseurs modulaires à niveaux multiples (112, 112'), chacun des convertisseurs (112, 112') présentant au moins un bras (114, 114'), le bras (114, 114') disposant d'un montage en série d'au moins deux cellules (116, 116', 116", 116"') et d'une inductance (118, 118'), chaque cellule (116, 116', 116", 116"') comprenant un dipôle actif à commander qui présente au moins un accumulateur d'énergie et deux sorties (122, 122') pour fournir une tension électrique, dans lequel les au moins deux convertisseurs (112, 112') sont couplés les uns aux autres de telle sorte que respectivement au moins l'une de ladite au moins une inductance (118, 118') provenant de l'au moins un bras (114, 114') de chacun des au moins deux convertisseurs (112, 112') est appliquée à un noyau magnétique commun (124), **caractérisé en ce que** les inductances (118, 118') appliquées au noyau magnétique (124) commun sont sélectionnées et appliquées au noyau magnétique (124) commun de telle sorte que les courants de sortie des au moins deux convertisseurs (112, 112') ne produisent aucun champ magnétique résultant.

**2.** Dispositif (110) selon la revendication précédente, dans lequel les au moins deux convertisseurs (112, 112') sont couplés les uns aux autres de telle sorte que chacune des inductances (118, 118') provenant de chacun des bras (114, 114') de chacun des au moins deux convertisseurs (112, 112') est appliquée au noyau magnétique (124) commun.

**3.** Dispositif (110) selon l'une quelconque des revendications précédentes, dans lequel les inductances (118, 118') appliquées au noyau magnétique (124) commun sont sélectionnées de telle sorte qu'une transmission d'énergie entre les convertisseurs (112, 112') couplés les uns aux autres n'est réalisable que par des courants internes des convertisseurs (112, 112') respectivement.

**4.** Dispositif (110) selon la revendication précédente, dans lequel une fréquence peut être réglée pour les courants internes et peut être adaptée à un matériau magnétique dont dispose le noyau magnétique (124) commun.

**5.** Dispositif (110) selon la revendication précédente, dans lequel le matériau magnétique comprend un matériau magnétique doux qui présente des propriétés ferromagnétiques à température ambiante.

**6.** Dispositif (110) selon la revendication précédente, dans lequel le matériau magnétique doux est sélectionné parmi le fer, le cobalt, le nickel, les alliages de nickel et de fer, des alliages de cobalt et de fer, les alliages FeAl, les alliages FeAlSi, les aciers ou les ferrites.

**7.** Dispositif (110) selon l'une quelconque des revendications précédentes, dans lequel le noyau magnétique (124) commun existe sous forme de noyau annulaire (128), sous forme de tôles de noyau ou sous forme de noyau en poudre.

**8.** Dispositif (110) selon l'une quelconque des revendications précédentes, dans lequel les inductances (118, 118') appliquées au noyau magnétique (124) commun se distinguent les unes des autres par une valeur absolue de leur inductance propre.

**9.** Dispositif (110) selon la revendication précédente, dans lequel les inductances (118, 118') appliquées au noyau magnétique (124) commun existent sous la forme de bobines (130, 130') qui se distinguent les unes des autres par un nombre de leurs enroulements.

**10.** Dispositif (110) selon l'une quelconque des revendications précédentes, dans lequel les bras (114, 114') de chacun des convertisseurs (112, 112') présentent une topologie qui est sélectionnée parmi une topologie à un bras, une topologie à deux bras, une topologie de STATCOM ou une topologie M2C.

**11.** Dispositif (110) selon la revendication précédente, dans lequel les convertisseurs (112, 112') couplés les uns aux autres présentent la même topologie.

**12.** Dispositif (110) selon l'une quelconque des revendications précédentes, dans lequel chacun des convertisseurs (112, 112') est connecté respectivement à un système de tension qui existe sous forme de réseau (134, 134').

**13.** Procédé pour coupler au moins deux convertisseurs modulaires à niveaux multiples (112, 112'), chacun des convertisseurs (112, 112') présentant au moins un bras (114, 114'), le bras (114, 114') disposant d'un montage en série d'au moins deux cellules (116, 116', 116", 116"') et d'une inductance (118, 118'), chaque cellule (116, 116', 116", 116"') comprenant un dipôle à commander qui présente au moins un accumulateur d'énergie et deux sorties (122, 122') pour fournir une tension électrique, dans lequel respectivement au moins l'une de ladite au moins une inductance (118, 118') provenant de l'au moins un bras (114, 114') de chacun des au moins deux convertisseurs (112, 112') est appliquée à un noyau magnétique (124) commun, **caractérisé en ce que** les inductances (118, 118') appliquées au noyau magnétique (124) commun sont sélectionnées et appliquées au noyau magnétique (124) commun de telle sorte que les courants de sortie des au moins deux convertisseurs (112, 112') ne produisent aucun champ magnétique résultant.

**14.** Procédé selon la revendication précédente, dans lequel les inductances (118, 118') appliquées au noyau magnétique (124) commun sont sélectionnées de telle sorte qu'une transmission d'énergie entre les convertisseurs (112, 112') couplés les uns aux autres n'a lieu que par des courants internes des convertisseurs (112, 112') respectivement.

**15.** Procédé selon la revendication précédente, dans lequel une fréquence est réglée pour les courants internes et est adaptée à un matériau magnétique dont dispose le noyau magnétique (124) commun.

Fig. 1

Fig. 2

## Fig. 3a

# Fig. 3b

# Fig. 3c

## Fig. 3d

# Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014100257
- WO 2014169388 A
- EP 2565883 A
- JP 2000152637 A
- DE 102014100257 A1


**In der Beschreibung aufgeführte Nicht-Patentliteratur**

- **GEORGIOS KONSTANTINON ; JIAQI ZHANG ; SALVADOR CEBALLOS et al.** *Comparison and evaluation of sub-module configurations in modular multilevel converters,* 958-963
- **H. AKAGI.** Classification, Terminology, and Application of the Modular Multilevel Cascade Converter (MMCC). *IEEE Transactions on Power Electronics 26.11,* November 2011, ISSN 0885-8993, 3119-3130
- **JOHANNES KOLB.** Optimale Betriebsführung des Modularen Multilevel-Umrichters als Antriebsumrichter für Drehstrommaschinen. *Zugl.: Karlsruhe, KIT, Diss. 2013. Diss. Karlsruhe,* 2014, ISBN 978-3-7315-0183-1
- **FELIX KAMMERER.** *Systemanalyse und Regelung des Modularen Multilevel Matrix Umrichters als Antriebsumrichter,* 2016
- **D. KARWATZKI ; L. BARNSCHKA ; A. MERTENS.** Survey on the Hexverter topology; A modular multilevel AC/AC converter. *2015 9th International Conference on Power Electronics and ECCE Asia (ICPE-ECCE Asia),* Juni 2015, 1075-1082
- **SHIGENORI INOUE ; HIROFUMI AKAGI.** A Bidirectional Isolated DC-DC Converter as a Core Circuit of the Next.-Generation Medium-Voltage Power Conversion System. *IEEE Transactions on Power Electronics 22.2,* Marz 2007, 535-542
- A proposal of Modular Multilevel Converter applying three winding transformers. **SHUNSUKE TAMADA ; YOSUKE NAKAZAWA ; SHOICHI IROKAWA.** 2014 International Power Electronics Conference (IPEC-Hiroshima 2014 - ECCE ASIA). IEEE, Mai 2014
- **C. OATES.** A methodology for developing 'Chainlink ' converters. *Proc. 13th European Conf. Power Electronics and Applications EPE,* 09. September 2009, 1-10
- Topology comparison for Solid State Transformer implementation. **S. FALCONES ; XIAOLIN MAO ; R AYYANAR.** IEEE PES General Meeting. IEEE, Juli 2010
- **S. V. G. OLIVEIRA ; D. G. CASTELLANI ; Y. DE NOVACS et al.** AC-AC modular multilevel converter applied to solid-state transformers. *Proc. IEGON 2014 - 40th Annual Conf. of the IEEE Industrial Electronics Society.,* Oktober 2014, 1174-1180